Europäisches Patentamt

European Patent Office

Office européen des brevets

(11) Publication number: **0 163 330**
**B1**

(12) **EUROPEAN PATENT SPECIFICATION**

(45) Date of publication of patent specification: **18.10.89**

(51) Int. Cl.⁴: **B 65 G 47/31, B 65 G 15/50, B 65 G 21/20, B 65 G 15/14, B 65 G 15/60**

(21) Application number: **85200617.0**

(22) Date of filing: **18.04.85**

(54) Device for spacing bottles.

(30) Priority: **27.04.84 NL 8401352**
**04.09.84 NL 8402700**

(43) Date of publication of application:
**04.12.85 Bulletin 85/49**

(45) Publication of the grant of the patent:
**18.10.89 Bulletin 89/42**

(84) Designated Contracting States:
**DE FR GB NL**

(56) References cited:
**DE-A-2 514 792**
**US-A-2 421 515**
**US-A-3 053 371**

(73) Proprietor: **Thomassen & Drijver-Verblifa N.V.**
**Zutphenseweg 51**
**NL-7418 AJ Deventer (NL)**

(72) Inventor: **Lutgendorf, Pieter Hendrik**
**No. 1 Schrijvertje**
**NL-7423 HS Deventer (NL)**

(74) Representative: **Konings, Lucien Marie Cornelis Joseph et al**
**OCTROOIBUREAU ARNOLD & SIEDSMA**
**Sweelinckplein 1**
**NL-2517 GK Den Haag (NL)**

Courier Press, Leamington Spa, England.

EP 0 163 330 B1

## Description

The invention relates to a method of conveying articles, said method comprising the steps of:

providing a supply conveyor,

providing a delivery conveyor,

providing an intermediate conveyor comprising at least one pair of driven endless conveying elements having conveyor surfaces facing each other for engaging there between said articles,

positioning said intermediate conveyor in overlapping relation with said supply conveyor and said delivery conveyor leaving free a non-overlapping zone, in which the articles are exclusively engaged by the conveying elements,

placing articles to be conveyed on said supply conveyor, and

removing said articles from said delivery conveyor.

Such a method is known from e.g. US-A-2 421 515. The apparatus known from this prior art specification comprises a set of conveying elements grabbing the frusto-conical articles, specifically tumblers, at their upper edge zones. This prior art specification is concerned only with the problem of transferring the articles from one moving conveyor or supporting surface to another moving conveyor or supporting surface.

The invention has for its purpose to adapt this prior art method such that it can be used for spacing articles, specifically bottles. When inspecting bottles, they should pass at sufficient intervals in order to permit the inspection means to observe the bottles from all sides. The inspection of bottles should preferably be carried out at a high rate, i.e. a large number of bottles passing each second. This involves the problem that the bottles handled with high speeds and subjected to substantial accelerations tend to fall over.

In view thereof, the invention has for its object to propose a method of spacing bottles with high speeds while the bottles are reliably maintained in upright positions when they are accelerated during the spacing.

Thereto the method according to the invention is characterized in that

the intermediate conveyor is driven at a higher speed than the supply conveyor, so that the articles are subjected to spacing,

the articles to be conveyed are bottles having a base, a cylindrical body and a neck,

said bottles are clamped in between said facing intermediate conveyor surfaces over their bodies, at side zones distant from the bases and the necks of the bottles in vertical flat planes, so as to maintain the bottles in upright positions.

It should be noted that from DE-A-2 514 792 a device for spacing boxes is known, which comprises a supply conveyor, a delivery conveyor and an intermediate conveyor arranged between said two conveyors in overlapping relation therewith. This prior art device is designed for bringing previously spaced boxes into a uniformly spaced relation. The intermediate conveyor consists of a decelerating conveyor, an accelerating conveyor and an adjusting conveyor. This adjusting conveyor comprises a combination of a set of horizontal belt parts engaging the boxes' bottoms and a set of endless belts clamping the boxes between them. Dependent from the boxes' positions on the horizontal belt parts relative to the delivery conveyor the boxes may or may not be accelerated by the clamping belts. The adjusting conveyor operates well, provided the boxes are almost spaced at the desired distances. The decelerating conveyor and the accelerating conveyor are provided for bringing the boxes at the predetermined spacings. The decelerating conveyor is constituted by two clamping belts, whereas the accelerating conveyor is constituted by endless belts engaging the boxes' bottoms.

This known intermediate conveyor would not be suited for handling specific articles having more or less slander and elongate shapes, such as bottles, since articles of that type would tend to fall over at the transfer point between the decelerating and the accelerating conveyors.

Further features and particulars of the invention will be explained in the following description with reference to the accompanying drawing.

In connection with the contents of claims 4 and 6 it should be noted that lubricating a conveyor or belt handling bottles is known per se, e.g. from US-A-3 053 371.

In the drawing show:

Figure 1 a simplified schematic elevation of a device implementing the method according to the invention,

Figure 2 a schematic perspective view of the device according to figure 1,

Fig. 3 a perspective view of a second embodiment of the invention,

Fig. 4 a perspective view of a third embodiment of the invention,

Fig. 5 a schematic plan view of a fourth device considerably further developed according the present invention,

Fig. 6 on large scale a schematic perspective view of detail VI of the device of Fig. 5, and

Fig. 7 on large scale a perspective section along line VII-VII of Fig. 6.

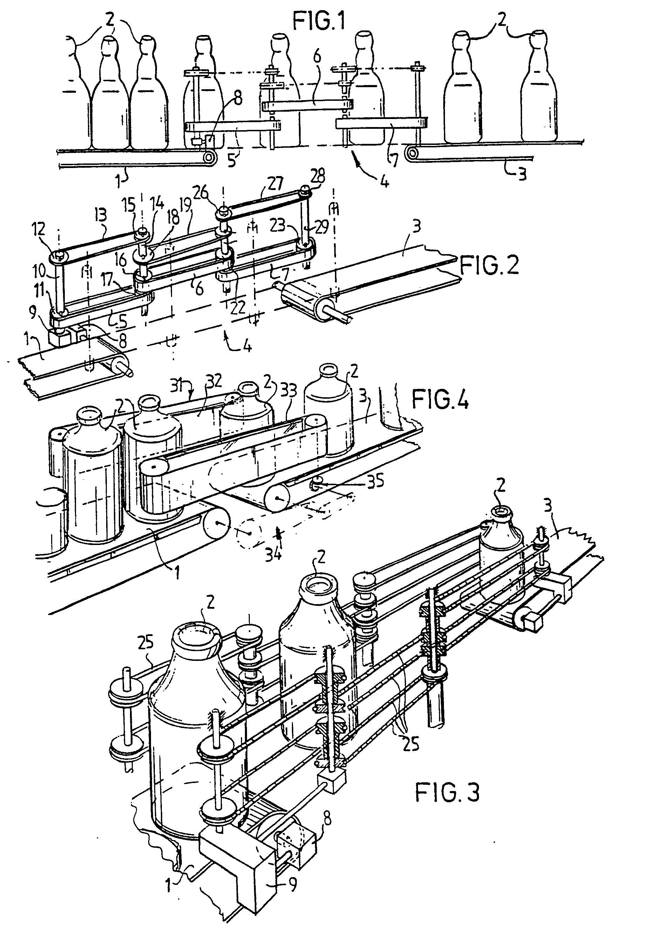

Fig. 1 shows a supply conveyor 1, on which bottles 2 positioned side by side are supplied with predetermined speed. At the right side a delivery conveyor 3 is provided delivering bottles 2 with higher speed, such that these bottles 2 have greater intervals. Between the supply conveyor 1 and the delivery conveyor 3 an intermediate conveyor 4 is provided having three sets of driven belts 5, 6 and 7 respectively. These belts are driven by the drive motor 8 of the supply conveyor 1.

Fig. 2 shows the latter aspect particularly more in detail. The motor 8 drives for rotation a shaft 10 through a transmission 9. This shaft 10 supports a pulley 11 constituting the driving pulley for the belt 5. Further the shaft 10 supports a driven wheel 12, guiding a rope 13 running at its other end over a wheel 15 coupled with a shaft 14. This wheel 15 also drives the shaft 14 which by supporting a pulley 16 guiding the belt 6 also drives the belt 6. Further the shaft 14 supports a free wheeling pulley 17 serving as a guide pulley for the belts 5.

The wheels 12 and 15 have such diameter rate that the belts 5 and 6 have correspondingly reversed proportional linear speeds. Further the shaft 14 supports a wheel 18 co-operating with a rope 19 which at its other end is guided around a wheel 21 mounted on a shaft 20, so driving said shaft 20. The shaft 20 further supports a pulley 22 for driving a belt 7 which adjacent said delivery conveyor 3 is guided around a freewheeling pulley 23.

Due to the use of the sets of belts 5, 6, 7 only one of each set being shown in Figs. 1 and 2 for clarification the bottles are prevented from falling over. The speed of the operating run of the supply conveyor 1 and the speed of the belts 5 may vary stepwise. The chance of the bottles 2 falling over is little, due to the fact that the bottles are supported at their sides. During taking over the bottles 2 from the belts 7 by the delivery conveyor 3 a smooth transfer is required. To this aim the speed of the belts 7 equals the speed of the delivery conveyor 3.

The shaft 20 supports a wheel 21 for driving a rope 27 guided at its other end over a wheel 28 mounted on a shaft 29 co-operating with the free wheeling pulley 23. The driven shaft 29 drives through means (not shown) the delivery conveyor 3.

Fig. 3 shows another embodiment in which bottles 2 are supported at their sides and are subjected to a speed variation by ropes 25. As an alternation of Figs. 1 and 2 these ropes have a double function viz. conveying bottles 2 according to sets of belts 5, 6 and 7 on the one hand and driving a subsequent rope or delivery conveyor 3 respectively according to the function of the ropes 13, 19, 27 on the other hand.

After the description of Figs. 1 and 2 the operation of the device of Fig. 3 will be clear so that further description thereof is superfluous.

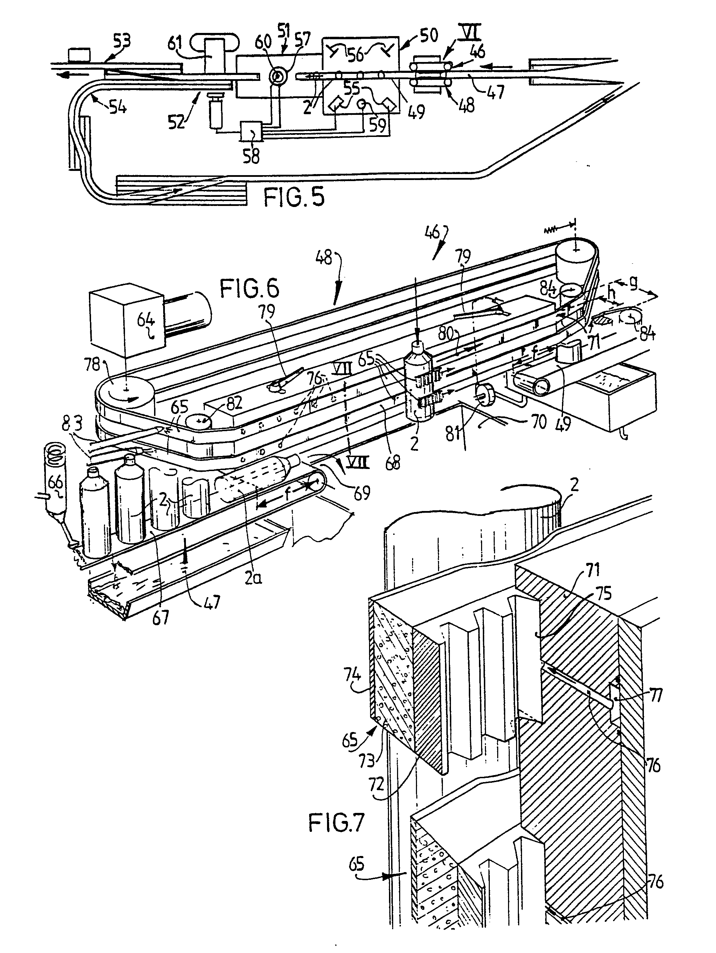

The supply conveyor 1 of Fig. 4 supplies round bottles 2 which are supplied to the delivery conveyor 3 through an intermediate conveyor 31. The intermediate conveyor 31 comprises two wide belts 32, 33 for supporting bottles 2 at their sides and for further conveying of these bottles 2. The delivery conveyor 3 is driven through a schematically-shown transmission 34 with higher speed than the supply conveyor 1. A transmission 35 drives the belts 32. The intermediate conveyor 4 overlaps to some extent the supply conveyor 1 and the delivery conveyor 3.

During taking over of the bottles 2 from the supply conveyor 1 by the intermediate conveyor 31 some slip will occur between bottles 2 and the endless conveying elements 23. The intermediate conveyor 31 is constructed in a way that the bottles are prevented from falling over.

In this respect the device 46 of Fig. 5 is strongly preferred over the devices described herebefore. The device 46 comprises a supply conveyor 47, an intermediate conveyor 48 to be built as a separate unit adjoining a delivery conveyor 49, a side inspector at the position of the delivery conveyor 49, a subsequent bottom inspector 51, an ejector 52, a selection conveyor 53 and a waste conveyor 54.

The bottles 2 mostly positioned side by side on the supply conveyor 47 which, when applying the invention, also may stand at any interval, are spaced by means of the intermediate conveyor 48 driven at considerably, e.g. 50 percent, higher speed and are transferred onto the delivery conveyor 49 driven with the same speed as the intermediate conveyor 48. The delivery conveyor 49 is incorporated in a side inspector 50 having observers 55 and lenses constructed and positioned for inspecting the bottles 2 at all sides with a capacity of the order of magnitude of 1,000, preferably 1,300 to 1,500 bottles per minute. The bottom inspector 51 is provided with an observer 57. The observers 55 and 57 are together with pulsators 59 and 60 registering each time the passing time of an observed bottle 2 through an electronic circuit 58 coupled with a control member 61 for controlling an ejector 52 in a way that — having in mind the convey time between pulsators 59 and 60 respectively and the ejector 52 — for each related bottle 2 a mechanically pushing or a blowing ejector member is excited or not for ejecting a broken or impure bottle 2 which is then discharged through said waste conveyor 48 or for letting pass a sound and clean the bottle 2 respectively.

Fig. 6 shows that the intermediate conveyor 48 overlaps the supply conveyor 47 and the delivery conveyor 49 over a distance. The intermediate conveyor 48 comprises a pair of ropes 65 clamping the bottles 2 between them and driven by mechanically or electronically interconnected motors 64 with the same speed as the delivery conveyor 49. The supply conveyor 47 comprises a conveying belt 63 lubricated with liquid soap by means of a soap supplying device 66 in order to make the co-efficient of friction between the bottoms of the bottle and the support surface 67 of the supply conveyor 47 low. Bottles 2a laying on the supply conveyor 47 as well as narrow bottles 2 will enter the receiver 70, e.g. a glass container from the convey space 68 of the intermediate conveyor 48 through a fall opening 69.

Fig. 7 shows the guide 71 of the ropes 65 each composed of a toothed belt driven by a toothed wheel 78 of a motor 64 said toothed belt 72 being provided with a layer of foam rubber 73 and an outer layer 74 of natural rubber having a high coefficient of friction with glass. The guide has for each rope 65 a groove 75 having at intervals a supply nozzle 76 for supplying lubricating water from a supply conduit 77 delivered with pressure by a pump 81. Due to this provision the friction resistance between guide 71 and rope 65 is low.

The guides 71 are separately adjustable relatively to each other transversely to the convey direction 80 for engaging the bottles 2 symmetrically and with identical elastic pressure. The ropes 65 are both considerably humidified by means of water sprinklers 83 in order to ensure that the humidity condition of both ropes 65 and therewith their coefficient of friction with glass is identical. The ropes 65 driven with high speed are simultaneously cooled by this water.

## Claims

1. A method of conveying articles (2), said method comprising the steps of:
   providing a supply conveyor (47),
   providing a delivery conveyor (49),
   providing an intermediate conveyor (48) comprising at least one pair of driven endless conveying elements (5, 6, 7, 33, 65) having conveyor surfaces facing each other for engaging there between said articles (2),
   positioning said intermediate conveyor (48) in overlapping relation with said supply conveyor (47) and said delivery conveyor (49) leaving free a non-overlapping zone, in which the articles (2) are exclusively engaged by the conveying elements (5, 6, 7, 33, 65),
   placing articles (2) to be conveyed on said supply conveyor (47), and
   removing said articles (2) from said delivery conveyor (49), characterized in that
   the intermediate conveyor (48) is driven at a higher speed than the supply conveyor (47), so that the articles (2) are subjected to spacing,
   the articles (2) to be conveyed are bottles having a base, a cylindrical body and a neck,
   said bottles (2) are clamped in between said facing intermediate conveyor (48) surfaces over their bodies, at side zones distant from the bases and the necks of the bottles in vertical flat planes, so as to maintain the bottles (2) in upright positions.

2. The method according to claim 1, characterized in that means (83) for humidifying said conveying elements (65) are used.

3. The method according to claims 1 or 2, characterized by the use of at least one set of conveying elements (65) each comprising a toothed belt (72) coated with an elastic layer (73) and an outer layer (74) of a material, e.g. natural rubber, having a high coefficient of friction with glass.

4. The method according to claim 3, characterized in that the conveying elements (65) of the intermediate conveyor (48) are guided in a guide (71) lubricated with water.

5. The method according to any one of the preceding claims, characterized by the use of bottle inspection means (55).

6. The method according to any one of the preceding claims, characterized in that a supply conveyor (47) is used which comprises a conveying belt lubricated with a lubricant (66).

7. The method according to any one of the preceding claims, characterized in that the convey space (68) of the intermediate conveyor (48) communicates through a fall opening (69) with a receiver (70).

8. The method according to any one of the preceding claims, characterized by the use of conveying elements (65) which are guided by pulleys mounted rotatably about axes extending perpendicularly to the direction of movement of said conveying elements (65).

## Patentansprüche

1. Verfahren zum Fördern von Gegenständen (2) mit den Schritten
   Bereitstellung eines Zuführförderers (47),
   Bereitstellung eines Abführförderers (49),
   Bereitstellung eines Zwischenförderers (48) mit mindestens einem Paar angetriebener Endlos-Förderelemente (5, 6, 7, 33, 65), die einander zugewandte Förderflächen aufweisen, um die genannten Gegenstände (2) dazwischen festzuhalten,
   Anordnung des Zwischenförderers (48) in einer Weise, daß er mit dem Zuführförderer (47) und dem Abführförderer (49) überlappt und eine nicht überlappende Zone freibleibt, in der die Gegenstände (2) ausschließlich von den Förderelementen (5, 6, 7, 33, 65) festgehalten werden,
   Bereitstellung der auf dem Zuführförderer (47) zu fördernden Artikel (2) und
   Entfernung der Artikel (2) von dem Abführförderer (49), dadurch gekennzeichnet, daß
   der Zwischenförderer (48) mit einer höheren Geschwindigkeit angetrieben wird als der Zuführförderer (47), so daß die Artikel (2) vereinzelt werden,
   die zu fördernden Artikel (2) Flaschen mit einem Boden, einem zylindrischen Körper und einem Hals sind und
   die Flaschen an Seitenbereichen ihrer Körper zwischen die einander zugewandten Förderflächen des Zwischenförderers (48) eingespannt werden, welche Seitenbereiche von den Böden und den Hälsen der Flaschen beabstandet und in vertikalen Planflächen angeordnet sind, um die Flaschen in einer aufrechten Position z, halten.

2. Verfahren nach Anspruch 1, dadurch gekennzeichnet, daß Mittel (83) zum Anfeuchten der Förderelemente (65) benutzt werden.

3. Verfahren nach Anspruch 1 oder 2, dadurch gekennzeichnet, daß mindestens ein aus einem Zahnriemen (72) bestehender Satz von Förderelementen (65) eingesetzt wird, wobei der Zahnriemen mit einer elastischen Schicht (73) und einer Außenschicht (74) belegt ist, welch letztere aus einem Material, wie z. B. Naturgummi besteht, das einen hohen Reibungskoeffizienten gegenüber Glas aufweist.

4. Verfahren nach Anspruch 3, dadurchgekennzeichnet, daß die Förderelemente (65) des Zwischenförderers (48) in einer mit Wasser geschmierten Führung (71) geführt sind.

5. Verfahren nach einem der vorgenannten Ansprüche, dadurch gekennzeichnet, daß Kontrollmittel (55) für die Flaschen verwendet werden.

6. Verfahren nach einem der vorgenannten Ansprüche, dadurch gekennzeichnet, daß ein Zuführförderer (47) verwendet wird, der ein mit einem Schmiermittel geschmiertes Förderband enthält.

7. Verfahren nach einem der vorgenannten Ansprüche, dadurch gekennzeichnet, daß die Förderstrecke (68) des Zwischenförderers (48) über eine Fallöffnung (69) mit einem Auffangbehälter (70) in Verbindung steht.

8. Verfahren nach einem der vorgenannten Ansprüche, dadurch gekennzeichnet, daß Förderelemente (65) eingesetzt werden, die auf drehbar an rechtwinklig zur Bewegungsrichtung der genannten Förderelemente verlaufenden Achsen gelagerten Rollen geführt sind.

**Revendications**

1. Procédé de transport d'objets (2), ce procédé consistant:
   à prévoir un transporteur d'amenée (47),
   à prévoir un transporteur d'évacuation (49),
   à prévoir un transporteur intermédiaire (48) comprenant au moins une paire d'éléments de transport sans fin entraînés (5, 6, 7, 33, 65) comportant des surfaces de transporteur qui se font face de façon que les objets (2) s'engagent, avec contact, entre elles,
   à positionner ce transporteur intermédiaire (48) suivant une disposition de chevauchement par rapport au transporteur d'amenée (47) et au transporteur d'évacuation (49) en laissant libre une zone sans chevauchement dans laquelle les objets (2) ne font l'objet d'un contact que de la part des éléments de transport (5, 6, 7, 33, 65),
   à placer des objets (2) à transporter sur le transporteur d'amenée (47) et
   à retirer ces objets (2) du transporteur d'évacuation (49), caractérisé en ce que;
   le transporteur intermédiaire (48) est entraîné à une vitesse supérieure au transporteur d'amenée (47), de sorte que les objets (2) font l'objet d'un espacement,
   les objets (2) à transporter sont des bouteilles comportant un fond, un corps cylindrique et un goulot,
   ces bouteilles (2) sont serrées entre les surfaces qui se font place du transporteur intermédiaire (48) sur l'étendue de leurs corps, en des zones latérales situées à distance des fonds et des goulots des bouteilles, suivant des plans verticaux d'alignement, de manière à maintenir les bouteilles (2) dans des positions verticales.

2. Procédé suivant la revendication 1, caractérisé en ce qu'on utilise des moyens (83) destinés à humidifier les éléments de transport (65).

3. Procédé suivant l'une des revendications 1 et 2, caractérisé par l'utilisation d'au moins un groupe d'éléments de transport (65) comprenant chacun une courroie crantée (72) revêtue d'une couche élastique (73) et d'une couche extérieure (74) en une matière, par exemple du caoutchouc naturel, possédant un coefficient élevé de frottement avec le verre.

4. Procédé suivant la revendication 3, caractérisé en ce que les éléments de transport (65) du transporteur intermédiaire (48) sont guidés dans un guide (71) lubrifié à l'eau.

5. Procédé suivant l'une quelconque des revendications précédentes, caractérisé par l'utilisation de moyens (55) d'inspection des bouteilles.

6. Procédé suivant l'une quelconque des revendications précédentes, caractérisé en ce qu'on utilise un transporteur d'amenée (47) qui comprend une bande transporteuse lubrifiée au moyen d'un lubrifiant (66).

7. Procédé suivant l'une quelconque des revendications précédentes, caractérisé en ce que l'espace de transport (68) du transporteur intermédiaire (48) communique avec un collecteur (70) par l'intermédiaire d'une ouverture de chute (69).

8. Procédé suivant l'une quelconque des revendications précédentes, caractérisé par l'utilisation d'éléments de transport (65) qui sont guidés par des poulies montées rotatives autour d'axes s'étendant perpendiculairement à la direction de déplacement de ces éléments de transport (65).

EP 0 163 330 B1

FIG.1

FIG.2

FIG.4

FIG.3

FIG.5

FIG.6

FIG.7